# EUROPEAN PATENT APPLICATION

(11) **EP 3 792 858 A1**
(43) Date of publication of application: **17.03.2021**
(21) Application number: 19841859.2
(22) Date of filing: 13.06.2019
(51) Int. Cl.: G06Q 20/10, G06Q 40/04

(54) **BLOCKCHAIN-BASED FINANCIAL TRADING EXECUTING METHOD AND APPARATUS, AND ELECTRONIC DEVICE**

(30) Priority: 23.07.2018 CN 201810813386
(71) Applicant: Advanced New Technologies Co., Ltd., George Town, Grand Cayman KY1-9008 (KY)
(72) Inventor: MA, Ling, Hangzhou, Zhejiang 311121 (CN); HE, Changhua, Hangzhou, Zhejiang 311121 (CN); ZHANG, Hui, Hangzhou, Zhejiang 311121 (CN); HU, Danqing, Hangzhou, Zhejiang 311121 (CN); JIN, Ge, Hangzhou, Zhejiang 311121 (CN)
(74) Representative: Goddar, Heinz J.
(86) International application number: PCT/CN2019/091042
(87) International publication number: WO 2020/019891

(57) **Abstract**

A method for blockchain-based financial trading, applied to a distributed exchange set up based on a blockchain is disclosed. The distributed exchange includes a plurality of trading centers deployed in a distributed manner. The method includes: receiving a trade order submitted by a user terminal in communication with a local one of the plurality of trading centers; transmitting the received trade order to other ones of the plurality of trading centers in the blockchain and receiving trade orders transmitted from the other ones of the plurality of trading centers submitted by user terminals in communication therewith; generating an order book by performing an order matching process on the received trade orders, transmitting the generated order book to each of the other ones of the plurality of trading centers in the blockchain, and receiving order books transmitted from the other ones of the plurality of trading centers that are generated through performing order matching processes on the corresponding received trade orders; and initiating a consensus process on the order books generated by the plurality of trading centers and executing the matched order in each of the order books for which consensus has been reached.

## Description

### TECHNICAL FIELD

One or more embodiments described herein relates to the field of blockchain and, in particular, to a blockchain-based method, apparatus, and electronic device for financial trading.

### BACKGROUND

The blockchain technology, also known as distributed ledger technology, is an emerging technology with a number of computing devices jointly participating in "bookkeeping" and maintaining a common and complete distributed database. It has found extensive use in many applications thanks to its characteristics of decentralization, openness and transparency, allowing every involved computing device to participate in database recording, and rapid data synchronization among all the involved computing devices.

### SUMMARY OF THE INVENTION

It is proposed herein a method for a blockchain-based financial trading, applied to a distributed exchange set up based on a blockchain. The distributed exchange comprises a plurality of trading centers deployed in a distributed manner. The method comprises:
receiving a trade order submitted by a user terminal in communication with a local one of the plurality of trading centers;
transmitting the received trade order to other ones of the plurality of trading centers in the blockchain and receiving trade orders transmitted from the other ones of the plurality of trading centers submitted by user terminals in communication therewith;
generating an order book by performing an order matching process on the received trade orders, transmitting the generated order book to each of the other ones of the plurality of trading centers in the blockchain, and receiving order books transmitted from the other ones of the plurality of trading centers that are generated through performing order matching processes on the corresponding received trade orders, wherein each of the order books comprises a matched order generated by the matching process on corresponding trade orders; and
initiating a consensus process on the order books generated by the plurality of trading centers and executing the matched order in each of the order books for which consensus has been reached.

Optionally, calibrating and synchronizing a clock of each of the plurality of trading centers in the distributed exchange in advance.

Optionally, the method may comprise, prior to receiving a trade order submitted by a user terminal in communication with a local one of the plurality of trading centers:
pushing transaction quote information to the user terminal in communication with the local one of the plurality of trading centers and recording a time instant of pushing the transaction quote information.

Optionally, the trade order transmitted to the other ones of the plurality of trading centers in the blockchain comprises a propagation delay of the trade order, wherein the propagation delay represents a propagation time of the trade order transmitted from the user terminal to the corresponding trading center in communication therewith.

Optionally, the propagation time is a time interval between the time instant of pushing the transaction quote information and a time instant of receiving the trade order.

Optionally, receiving a trade order submitted by a user terminal in communication with a local one of the plurality of trading centers may comprise:
receiving trade orders submitted by user terminals connected to the local trading center within a first predetermined period of time beginning at the pushing time instant, and
wherein receiving trade orders transmitted from the other ones of the plurality of trading centers submitted by user terminals in communication therewith comprises:
determining a transmission time instant of transmitting the received trade order to each of the other ones of the plurality of trading centers in the blockchain; and
receiving trade orders transmitted from the other ones of the plurality of trading centers submitted by user terminals in communication therewith within a second predetermined period of time after the transmission time instant.

Optionally, transmitting the generated order book to each of the other ones of the plurality of trading centers in the blockchain may comprise:
determining a start time instant of performing the order matching process on the received trade orders; and
transmitting the order book that is generated within the first predetermined period of time after the start time instant to each of the other ones of the plurality of trading centers in the blockchain, and
wherein receiving order books transmitted from the other ones of the plurality of trading centers that are generated through performing order matching processes on the corresponding received trade orders comprises:
   determining a transmission time instant of transmitting the generated order book to each of the other ones of the plurality of trading centers in the blockchain; and
   receiving the order book that is transmitted from each of the other ones of the plurality of trading centers and generated through performing the order matching process on the corresponding received trade orders within the second predetermined period of time after the transmission time instant.

Optionally, the first predetermined period of time may be longer than the first predetermined period of time.

Optionally, the trade orders may include buy orders and sell orders,
wherein generating an order book by performing an order matching process on the received trade orders comprises:
matching each of the sell orders to one of the buy orders with a buy price higher than or equal to a sell price of the sell order and with a shortest propagation time to generate the matched order; and
generating the order book based on the matched order.

Optionally, initiating a consensus process on the order books generated by the plurality of trading centers may comprise:
comparing the generated order book with each of the received order books transmitted from the other ones of the plurality of trading centers to determine the number of identical order books out of the order books generated by the plurality of trading centers;
calculating a ratio of the number of identical order books to the total number of the plurality of trading centers in the distributed exchange; and
determining whether the ratio reaches a predetermined threshold and, if so, identifying the identical order books out of the order books generated by the plurality of trading centers as an order book for which consensus has been reached.

Optionally, the method may further comprise
returning an execution result of the matched order in the order book for which consensus has been reached to a corresponding user terminal.

Optionally, the distributed exchange may comprise a plurality of trading centers physically distributed in different regions.

It is also proposed herein an apparatus for blockchain-based financial trading, applied to a distributed exchange set up based on a blockchain. The distributed exchange comprises a plurality of trading centers deployed in a distributed manner. The apparatus comprises:
a reception module configured to receive a trade order submitted by a user terminal in communication with a local one of the plurality of trading centers;
a transmission module, configured to transmit the received trade order to other ones of the plurality of trading centers in the blockchain and receive trade orders transmitted from the other ones of the plurality of trading centers submitted by user terminals in communication therewith;
a matching module configured to generate an order book by performing an order matching process on the received trade orders,
the transmission module further configured to transmit the generated order book to each of the other ones of the plurality of trading centers in the blockchain, the reception module further configured to receive order books transmitted from the other ones of the plurality of trading centers that are generated through performing order matching processes on the corresponding received trade orders, wherein each of the order books comprises a matched order generated by the matching process on the corresponding trade orders; and
an execution module configured to initiate a consensus process on the order books generated by the plurality of trading centers and execute the matched order in each of the order books for which consensus has been reached.

Optionally, calibrating and synchronizing a clock of each of the plurality of trading centers in the distributed exchange in advance.

Optionally, the transmission module may be further configured to,
prior to receiving a trade order submitted by a user terminal in communication with a local one of the plurality of trading centers, push transaction quote information to the user terminal in communication with the local one of the plurality of trading centers and record a time instant of pushing the transaction quote information.

Optionally, the trade order transmitted to the other ones of the plurality of trading centers in the blockchain may comprise a propagation delay of the trade order, wherein the propagation delay represents a propagation time of the trade order transmitted from the user terminal to the corresponding trading center in communication therewith.

Optionally, the propagation time is a time interval between the time instant of pushing the transaction quote information and a time instant of receiving the trade order.

Optionally, the reception module may be further configured to:
receive a trade order submitted by the user terminal in communication with the local one of the plurality of trading centers within a first predetermined period of time after the time instant of pushing, and
wherein the reception module is further configured to:
   determine a transmission time instant of transmitting the received trade order to each of the other ones of the plurality of trading centers in the blockchain; and
   receive trade orders transmitted from the other ones of the plurality of trading centers submitted by the user terminals in communication therewith within a second predetermined period of time after the transmission time instant.

Optionally, the transmission module may be further configured to:
determine a start time instant of performing the order matching process on the received trade orders; and
transmit the order book that is generated within the first predetermined period of time after the start time instant to each of the other ones of the plurality of trading centers in the blockchain, and
wherein the reception module is further configured to:
   determine a transmission time instant of transmitting the generated order book to each of the other ones of the plurality of trading centers in the blockchain;
   receive the order book that is transmitted from each of the other ones of the plurality of trading centers and generated through performing the trade order matching process on the corresponding received trade orders within the second predetermined period of time after the transmission time instant.

Optionally, the first predetermined period of time may be longer than the first predetermined period of time.
the trade orders may include buy orders and sell orders, wherein
the matching module is configured to:
match each of the received sell orders to one of the buy orders with buy price higher than or equal to a sell price of the sell order and with a shortest propagation time to generate the matched order; and
generate the order book based on the matched order.

Optionally, the execution module may be configured to:
compare the generated order book with each of the received order books transmitted from the other ones of the plurality of trading centers to determine the number of identical order books out of the order books generated by the plurality of trading center;
calculate a ratio of the number of identical order books to the total number of trading centers in the distributed exchange; and
determine whether the ratio reaches a predetermined threshold and, if so, identify the identical order books out of the order books generated by the plurality of trading centers as an order book for which consensus has been reached.

Optionally, the transmission module may be further configured to:
return an execution result of the matched order in the order book for which consensus has been reached to the corresponding user terminal.

Optionally, the distributed exchange may comprise a plurality of trading centers physically distributed in different regions.

It is also proposed herein an electronic device for applied to a distributed exchange set up based on a blockchain. The distributed exchange comprises a plurality of trading centers deployed in a distributed manner. The electronic device comprises:
a processor; and
a storage device for storing machine-executable instructions,
wherein upon reading and executing machine-executable instructions corresponding to a control logic for blockchain-based financial trading that are stored on the storage device, the processor is caused to:
receive a trade order submitted by a user terminal in communication with a local one of the plurality of trading centers;
transmit the received trade order to other ones of the plurality of trading centers in the blockchain and receive trade orders transmitted from the other ones of the plurality of trading centers submitted by user terminals in communication therewith;
generate an order book by performing an order matching process on the received trade orders, transmit the generated order book to each of the other ones of the plurality of trading centers in the blockchain, and receive order books transmitted from the other ones of the plurality of trading centers that are generated through performing trade order matching processes on the corresponding received trade orders, wherein each of the order books comprises a matched order generated by the matching process on the corresponding trade orders; and
initiate a consensus process on the order books generated by the plurality of trading centers and execute the matched order in each of the order books for which consensus has been reached.

As described above, the trading centers can share trade orders submitted by local user terminals synchronously, and based on a blockchain consensus mechanism, the trading centers can reach consensus on an order book generated by an order matching process performed on the corresponding received trade orders. Thus, the distributed trading centers in the distributed exchange each have an equal power of processing trade orders, thereby allowing different user terminals to obtain equal trading opportunities by communicating with a respective local trading center. Therefore, the blockchain-based integration of geographically distributed trading centers into a distributed exchange fundamentally accomplishes the distributed deployment of trading centers that are per se scarce resources and makes such scarce resources available to the public, thus guaranteeing equal and effective trading opportunities for users.

### BRIEF DESCRIPTION OF THE DRAWINGS

Fig. 1 is a flow diagram of a method for blockchain-based financial trading according to an exemplary embodiment.
Fig. 2 illustrates the architecture of a distributed exchange according to an exemplary embodiment.
Fig. 3 is a structural schematic of an electronic device according to an exemplary embodiment.
Fig. 4 is a block diagram of an apparatus for blockchain-based financial trading according to an exemplary embodiment.

### DETAILED DESCRIPTION

It is intended herein to propose a distributed exchange built by integrating trading centers deployed in a distributed manner based on blockchain technology, to spread scarce processing resources of the trading centers and make scarce resources available to the public, thereby guaranteeing equal and effective trading opportunities for users.

In practice, based on the blockchain technology, a plurality of trading centers deployed in a distributed manner may be assembled together to form a distributed exchange.

For example, in practice, based on the blockchain technology, a plurality of trading centers physically distributed in different regions can be integrated into a distributed exchange. As such, scarce processing resources of the trading centers can be distributed across those regions, providing equal and effective trading opportunities to users in the regions.

Each trading center in the distributed exchange can receive trade orders submitted by local user terminals and share them synchronously with the other trading centers. Then, an order book is generated by performing an order matching process on the received trade orders.

Additionally, each trading center may also share the locally generated order book synchronously with the other trading centers. The individual trading centers may reach consensus for the generated order books based on a blockchain consensus mechanism. Following that, matched orders in the order books, for which consensus has been reached, can be executed. In this way, matching and execution of the users' trade orders is achieved.

As described above, the trading centers can share trade orders submitted by local user terminals synchronously, and based on a blockchain consensus mechanism, the trading centers can reach consensus on an order book generated by an order matching process performed on the corresponding received trade orders. Thus, the distributed trading centers in the distributed exchange each have an equal power of processing trade orders, thereby allowing different user terminals to obtain equal trading opportunities by communicating with a respective local trading center. Therefore, the blockchain-based integration of geographically distributed trading centers into a distributed exchange fundamentally accomplishes the distributed deployment of trading centers that are per se scarce resources and makes such scarce resources available to the public, thus guaranteeing equal and effective trading opportunities for users.

The present invention will be described by way of specific embodiments in conjunction with particular application scenarios.

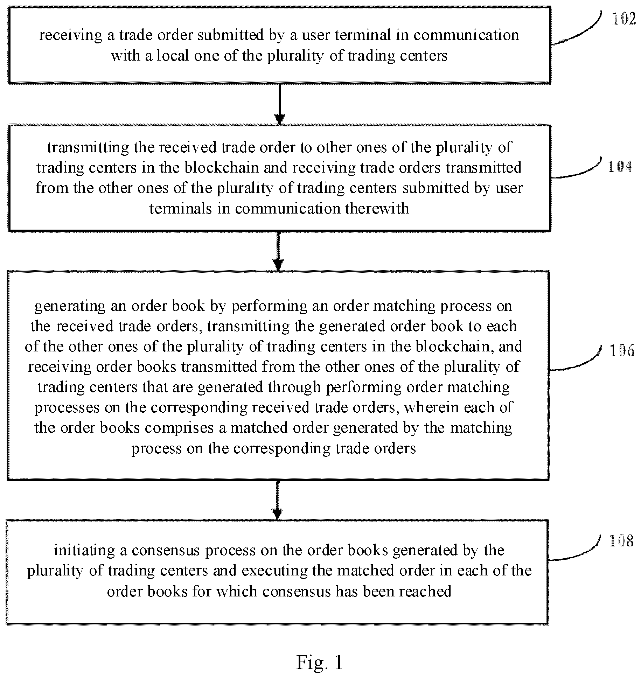

Reference is now made to Fig. 1, which shows a method for blockchain-based financial trading according to an embodiment described herein, applicable to any trading center in a distributed exchange set up based on a blockchain. The distributed exchange includes a plurality of trading centers deployed in a distributed manner and is configured to carry out the steps as detailed below.

In step 102, receiving a trade order submitted by a user terminal in communication with a local one of the plurality of trading centers.

In step 104, transmitting the received trade order to other ones of the plurality of trading centers in the blockchain and receiving trade orders transmitted from the other ones of the plurality of trading centers submitted by user terminals in communication therewith.

In step 106, generating an order book by performing an order matching process on the received trade orders, transmitting the generated order book to each of the other ones of the plurality of trading centers in the blockchain, and receiving order books transmitted from the other ones of the plurality of trading centers that are generated through performing order matching processes on the corresponding received trade orders, wherein each of the order books comprises a matched order generated by the matching process on corresponding trade orders.

In step 108, initiating a consensus process on the order books generated by the plurality of trading centers and executing the matched order in each of the order books for which consensus has been reached.

Specific examples of the blockchain described herein may include, but are not herein limited to, private blockchain, public blockchain and consortium blockchain.

For example, in one scenario, the blockchain may be in particular a consortium blockchain set up with server devices of the trading centers as member devices. A user can access the server device of any of the trading centers in the consortium blockchain via a user terminal to gain an equal trading opportunity.

A trade order, as described herein, refers to an order for a financial transaction such as a stock transaction, a foreign exchange transaction or the like, submitted by a user via a user terminal in communication with one of the trading centers.

As described herein, a blockchain operating entity may organize a number of trading centers deployed in a distributed manner into a distributed exchange based on blockchain technology. Such a distributed exchange in particular refers to a novel form of exchange including a number of trading centers that are distributed in different physical regions and possess equal ability to process trade orders and thus assuming a distributed architecture.

In one embodiment shown herein, a number of trading centers distributed in different regions may be assembled into a distributed exchange based on the blockchain technology, allowing distribution of scarce processing resources of the trading centers across the different regions and granting equal and effective trading opportunities to users in those regions. For example, in a practical application, for a particular financial product, trading centers may be deployed globally in countries or cities with dense transaction participants and then organized to form a distributed exchange based on the blockchain technology.

The following description will be given in an exemplary context where trading centers distributed in different regions are assembled into a distributed exchange based on a consortium blockchain. In practice, an operating entity of the consortium blockchain may establish a consortium blockchain network in advance, in which server devices (e.g., servers, server clusters or trading platforms based on server clusters) at trading centers distributed in different regions may join as consortium members of the consortium blockchain.

How the server devices at the trading centers join the consortium blockchain network as consortium members are not described in detail herein, and those skilled in the art can refer to publications in the related art for more details in this regard when practicing the technical solution described herein.

Herein, in order to ensure that the trading centers that make up the distributed exchange have equal ability to handle trade orders:
on the one hand, initial data maintained by every trading center is required to be exactly the same. For example, every trading center may commonly maintain the exactly same transaction quote data, ensuring synchronization among all the trading centers in terms of the initial data;
on the other hand, as the trading centers are located in different regions and thus possibly with asynchronous clocks of their server devices, clock calibration and synchronization may be performed among the trading centers, ensuring that the server devices at the trading centers have synchronized clocks. For example, in practice, clock calibration and synchronization can be carried out among the individual trading centers so that time synchronization accuracy between the server devices of any two trading centers is controlled within a tolerable error range. For example, in a financial trading application, the time synchronization accuracy between the server devices of any two trading centers may be controlled within 1 millisecond.

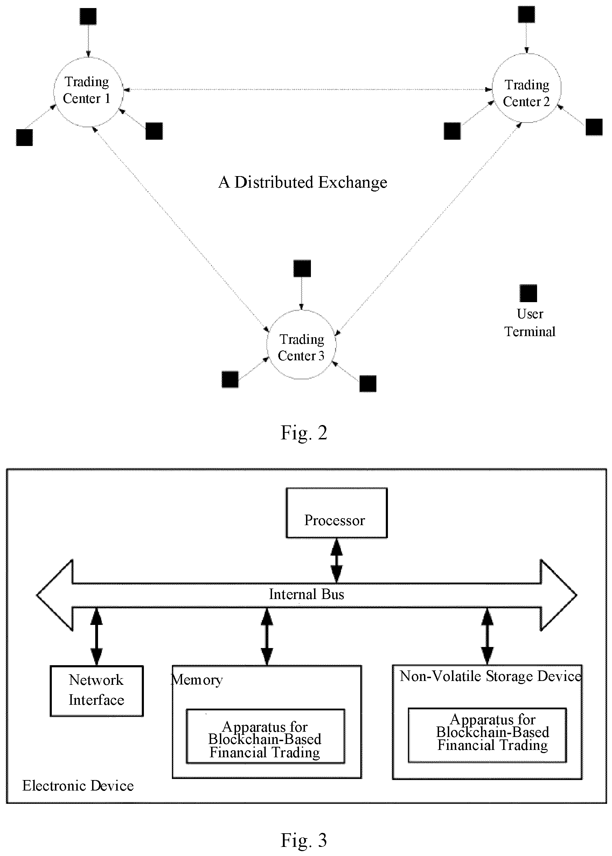

Reference is now made to Fig. 2, a diagram illustrating the architecture of a distributed exchange set up based on a consortium blockchain.

The distributed exchange will be described below with reference to Fig. 2 in an exemplary context of being made up of trading centers 1-3 located in different regions.

Herein, each of the trading centers 1-3 allows access from a number of user terminals, so that users may submit financial trade orders to server devices of the trading centers to which the access is made.

The trading centers 1-3 may synchronize trade orders submitted from various local user terminals with one another, collect trade orders submitted from the individual trading centers via user terminals throughout the network, and generate order books by performing order matching processes on the collected trade orders. In addition, the trading centers may also synchronize the respective order books that they have generated, each collect the order books generated by the other trading centers throughout the network, reach consensus on the order books that they have generated based on a blockchain consensus mechanism, and execute matched orders in the order books, for which consensus has been reached. As such, by establishing access to the local trading centers, user terminals distributed in different regions can be given equal trading opportunities.

It should be noted that each trading center may be configured with a timeout period for each of the following operations: receiving trade orders submitted by local trading client terminals in communication therewith; receiving trade orders transmitted synchronously from the other trading centers; synchronously transmitting a generated order book to the other trading centers; and receiving the generated order books transmitted synchronously from the other trading centers.

For example, in one embodiment illustrated herein, for each transaction center, when receiving trade orders submitted by trading client terminals in communication with their respective local trading centers, each trading center may, within a first predetermined period of time starting from a time instant T0 of pushing transaction quote information, receive trade orders that are submitted by the user terminals in communication with their respective local trading centers . In addition, during the reception of trade orders transmitted synchronously from the other trading centers, each trading center may be configured to determine a transmission time instant of transmitting the received trade orders to the other trading centers and receive trade orders transmitted by the other trading centers within a second predetermined period of time starting from the transmission time instant.

Further, in one embodiment illustrated herein, during the synchronous transmission of a generated order book to the other trading centers, each trading center may be configured to determine a start time instant when an order matching process on the received trade orders starts and transmit to the other trading centers order books generated within a first predetermined period of time beginning at the start time instant. Accordingly, during the reception of generated order books transmitted synchronously by the other trading centers, each trading center may be configured to determine a transmission time instant when its generated order book is transmitted to the other trading centers and receive order books transmitted by the other trading centers within a second predetermined period of time starting from the transmission time instant.

The aforementioned second predetermined period of time may be longer than the first predetermined period of time. That is, in practice, a timeout period for each trading center to transmit trade orders or an order book synchronously to other trading centers may be shorter than a timeout period for each trading center to receive trade orders or order books transmitted synchronously from the other trading centers.

In this way, each trading center may have a sufficient time to collect trade orders or order books transmitted synchronously by the other trading centers throughout the network.

In the following embodiments, as an example, the first predetermined period of time is set to 10 milliseconds (ms) and the second predetermined period of time is set to 100 milliseconds (ms).

It should be particularly stressed that setting the first and second predetermined periods of time to 10 and 100 milliseconds, respectively, is only for exemplification. Apparently, in practical applications, those skilled in the art may customize the durations of the first and second predetermined periods of time as required by the applications.

Referring to Fig. 2, herein, the trading centers 1-3 may push transaction quote information synchronously to user terminals with access thereto, so that users can view, on their client terminals, information about the most recent quotes of transactions as reference.

The transaction quote information may particularly include information relating to financial products, which may serve as transaction reference information for users.

For example, in practice, with stock trading as an example, the transaction quote information may in particular include information about price variations of stocks, and the like.

It should be noted that the individual trading centers may push transaction quote information to user terminals synchronously in a periodic manner.

For example, in practical applications, the transaction quote information may be pushed at periodic intervals on the millisecond order (i.e., sufficiently short), so that the trading centers can push the transaction quote information synchronously to user terminals with access thereto in almost real time.

With continued reference to Fig. 2, assuming the trading centers 1-3 send transaction quote information to user terminals with access thereto synchronously at a time instant T0, the user terminals located closest to the respective trading centers will be the earliest ones that receive the information about the most recent quotes. Each user may know details in the most recent quotes by viewing the transaction quote information as transaction reference information on his/her client terminal and may submit trade order(s) via the client terminal to the accessed trading centers.

In one embodiment illustrated herein, each trading center may start a time count at the time instant T0 when pushing the transaction quote information synchronously to local user terminals in communication therewith and receive trade orders submitted by these user terminals within a 10-millisecond period after the time instant T0.

In other words, following pushing the transaction quote information synchronously to the accessed user terminals at the time instant T0, each trading center may provide a period of 10 milliseconds for receiving trade orders submitted by the user terminals. Other trade orders received by the individual trading centers after the elapse of the 10-millisecond period starting from the time instant T0 may be matched in the next consensus cycle.

After receiving the trade orders submitted from the accessed user terminals, each trading center may estimate a propagation delay of each received trade order. The propagation delay is used to in particular represent a propagation time of the trade order transmitted from the user terminal to the corresponding trading center in communication therewith.

In one embodiment illustrated herein, the propagation delay may be in particular represented by the time interval from the time instant T0 (when the transaction quote information is pushed) to a time instant when the trade order is received.

In this situation, when pushing the transaction quote information at the time instant T0 to the accessed user terminals, each trading center may record a local timestamp as a time instant of pushing the transaction quote information; when receiving trade order submitted by user terminal, each trading center may record a local timestamp of receiving the trade order as a time instant of receiving the trade order. After that, for each received trade order, each trading center may derive a propagation time for the trade order transmitted from the user terminal to the trading center by subtracting the recorded time instant of pushing the transaction quote information from the recorded time instant of receiving the trade order.

Of course, in practice, instead of the above-described time interval between the time instant T0 and the time instant of receiving the trade order, the propagation delay of the trade order may also be, without particular limitation herein, represented only by the time instant of receiving the trade order.

In a further embodiment illustrated herein, since propagation delays of trade orders arrived at the trading centers are important parameters for order matching process in financial trading scenarios, the trading centers may collect the propagation delays of the trade orders received from the user terminals in communication with respective local trading centers and transmit the propagation delays along with the received trade orders synchronously to the other trading centers.

In this situation, apart from the original information of the trade orders, the propagation delays of the trade orders may also be transmitted synchronously from each trading center to the other trading centers.

Of course, in practical applications, instead of being transmitted along with the trade orders, the propagation delays of the trade orders may also be transmitted separately therefrom, without particular limitation herein. For example, after each trading center transmits trade orders received from and submitted by user terminals in communication with respective local trading centers to the other trading centers synchronously, the propagation delays of these trade orders may further be transmitted synchronously to the other trading centers in separately created messages.

With continued reference to Fig. 2, upon the elapse of the 10-ms period starting from the time instant T0, each trading center may immediately transmit the order information received within the period to the other trading centers in the consortium blockchain synchronously.

For example, in one implementation, the received trade orders submitted by the user terminals in communication with the local trading centers may be broadcast to the other trading centers in the consortium blockchain. For example, taking trading center 1 as an example, the trading center 1 may broadcast the received trade orders submitted by the user terminals in communication therewith to the trading centers 2, 3.

Correspondingly, for any one of the trading centers 1-3, in addition to transmitting the received trading centers submitted by user terminals in communication with the local trading center to the other trading centers synchronously, it may also receive trade orders from the other trading centers that are submitted by user terminals in communication therewith.

In one embodiment illustrated herein, subsequent to transmitting the received trade orders synchronously to the other trading centers, each trading center may simultaneously start a time count at the (TO+10 ms) time instant (i.e., time instant of the transmitting the received trade orders to the other trading centers) and receive trade orders from the other trading centers within a period of 100 ms after the (T0+10 ms) time instant.

In other words, after transmitting the received trade orders synchronously to the other trading centers, each trading center provides a period of 100 ms for receiving trade orders from the other trading centers.

Herein, once 100 ms has elapsed after each trading center transmitting the received trade orders synchronously to the other trading centers, regardless of whether all of the trade orders synchronously transmitted by the other trading centers are received, an order matching process may be immediately initiated based on the trade orders collected throughout the network.

The order matching process on the trade orders collected throughout the network is a process to match buy and sell orders in the collected trade orders and generating matched orders to be executed.

In one embodiment illustrated herein, in the order matching process performed by each trading center on the trade orders collected throughout the network, each received sell order may be matched to the one(s) of buy orders with buy price(s) higher than or equal to a sell price of the sell order and with the shortest propagation time so as to generate the matched order(s), and an order book may be generated based on the matched order(s). In other words, the order books may only record matched orders that can be executed.

In practice, for each collected sell order, the trading center may search for any buy order with a buy price higher than or equal to the sell order's sell price. If there is one such buy order, a match may be identified between the prices of the buy and sell orders and a matched order is generated based on the sell and buy orders. If there are multiple such buy orders with the same buy price, a comparison may be performed between propagation delays of these buy orders so as to generate one or more matched orders based on the sell order and the one or more of buy orders with the shortest propagation time.

With continued reference to Fig. 2, in one embodiment illustrated herein, upon initiating the order matching process after the 100-ms period, each trading center may start a time count, and synchronously transmit the order book locally generated to the other trading centers within a period of 10 ms after the (TO+10 ms+100 ms) time instant (i.e., the time instant when the order matching process starts).

In other words, each trading center transmits the generated order book synchronously to the other trading centers within a 10-ms period starting from the (TO+10 ms+100 ms) time instant.

Correspondingly, for any of the trading centers 1-3, in addition to transmitting its own order book synchronously to the other trading centers, it may also receive order books from the other trading centers.

In one embodiment illustrated herein, upon transmitting the locally generated order book synchronously to the other trading centers, each trading center may start a time count and receive order books synchronously transmitted from the other trading centers within a 100-ms period starting from the (T0+10 ms+100 ms+10 ms) time instant (i.e., the time instant when the locally generated order book is transmitted to the other trading centers).

Herein, after collecting all the order books generated throughout the consortium blockchain network, the trading centers may trigger a consensus process on the collected order books based on a consensus algorithm that supported by the consortium blockchain.

It should be noted that it is not limited herein to any particular consensus algorithm adopted by the consortium blockchain.

For example, in practice, any consensus algorithm widely used in the field of consortium blockchains, such as pbft, raft, etc., may be used herein. Alternatively, the consensus algorithm may also be a customized one employed by the operating entity of the consortium blockchain according to its own business scenarios and needs.

In one embodiment illustrated herein, the consensus algorithm employed by the consortium blockchain may be a Byzantine Fault Tolerance algorithm. By this algorithm, in the consensus process on the trade orders collected throughout the network, each trading center may compare its own order book with the order books received from the other trading centers to determine the number of identical order books out of the order books generated by the trading centers. A ratio of the number of identical order books to the total number of the trading centers in the distributed exchange may be then calculated and compared with a Byzantine Fault Tolerance threshold. If the ratio reaches the threshold, the identical trade order book out of the order books generated by the trading center may be determined as an order book for which consensus has been reached.

In practice, a particular value of the Byzantine Fault Tolerance threshold may be customized by the operating entity of the consortium blockchain according to its own actual needs.

For example, the Byzantine Fault Tolerance threshold may be set to 2/3, as a common practice of Byzantine Fault Tolerance algorithms. In this situation, it may be determined whether the calculated ratio of the number of identical order books to the total number of trading centers in the distributed exchange reaches 2/3. If so, a consensus is reached, and the identical order books out of the order books generated by the trading centers may be identified as an order book for which the consensus has been reached. For example, among the order books generated by the trading centers 1-3, if those generated by the trading centers 1 and 2 are identical to each other, the ratio of the number of identical order books to the total number of trading centers reaches 2/3, then it can be deemed that consensus has been reached and the order books generated by the trading centers 1 and 2 are identified as an order book for which consensus has been reached.

After the consensus process performed by the trading centers 1-3, the matched order recorded in the order book for which consensus has been reached may be executed, and a result of the execution of the matched order in the order book for which consensus has been reached may be returned to the corresponding user terminal.

As described above, the trading centers can share trade orders submitted by local user terminals synchronously, and based on a blockchain consensus mechanism, the trading centers can reach consensus on an order book generated by an order matching process performed on the corresponding received trade orders. Thus, the distributed trading centers in the distributed exchange each have an equal power of processing trade orders, thereby allowing different user terminals to obtain equal trading opportunities by communicating with a respective local trading center. Therefore, the blockchain-based integration of geographically distributed trading centers into a distributed exchange fundamentally accomplishes the distributed deployment of trading centers that are per se scarce resources and makes such scarce resources available to the public, thus guaranteeing equal and effective trading opportunities for users.

For example, in the centralized architecture of traditional exchanges, among the matching process for buy and sell orders submitted by users, transaction rules allow those orders reaching the exchange earlier to be processed with higher priorities, that is, users located physically closer to the exchange are more likely get their orders to be traded more earlier. This seemingly fair mechanism will lead to locations in the vicinity of the exchange becoming scarce resources that only a small bunch of organizations or individuals abundant in funds can afford. By contrast, according to is the embodiments described herein, through assembling a plurality of trading centers distributed in different regions into a distributed exchange based on the blockchain technology, user terminals distributed in these regions can access the corresponding local trading centers to obtain equal trading opportunities. In this way, the trading centers that would be regarded as scarce resources can be made available to the public, granting equal and effective trading opportunities to geographically distributed users.

Described herein are also apparatus embodiments for blockchain-based financial trading, which corresponds to the above method embodiment. The apparatus is applicable to a distributed exchange that is set up based on a blockchain and includes a plurality of trading centers deployed in a distributed manner. The apparatus embodiments described hereinafter can be applied to an electronic device and implemented by software, or hardware or any combination of software and hardware. For example, in a software implementation, the apparatus is formed in a logical sense by running corresponding computer program instructions read by a processor of an electronic device in which it is embodied from a non-volatile storage device into a memory. In terms of hardware, as shown in Fig. 3, a diagram is provided illustrating the hardware structure of an electronic device in which the apparatus described hereinafter is embodied. In addition to the shown processor, memory, network interface and non-volatile storage device, in the embodiments of the electronic device in which the apparatus is embodied, the electronic device may also include other hardware as required by intended functions thereof, which is, however, not described in further detail hereinafter.

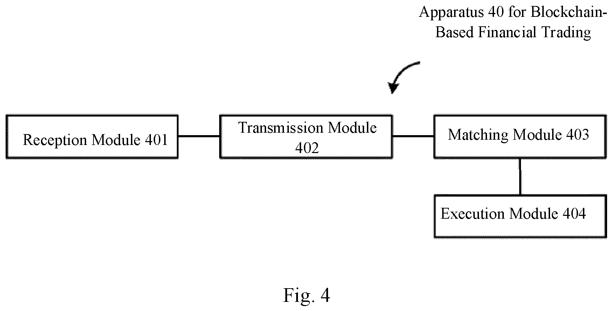

Fig. 4 s is a block diagram of an apparatus for blockchain-based financial trading according to an exemplary embodiment described herein.

Referring to Fig. 4, the apparatus 40 is applicable to the electronic device as described above in connection with Fig. 2 and includes a reception module 401, a transmission module 402, a matching module 403 and an execution module 404.

The reception module 401 is configured to receive a trade order submitted by a user terminal in communication with a local one of the plurality of trading centers.

The transmission module 402 is configured to transmit the received trade order to other ones of the plurality of trading centers in the blockchain and receive trade orders transmitted from the other ones of the plurality of trading centers submitted by user terminals in communication therewith.

The matching module 403 is configured to generate an order book by performing an order matching process on the received trade orders.

The matching module 403 is further configured to transmit the generated order book to each of the other ones of the plurality of trading centers in the blockchain, and the reception module 401 is further configured to receive order books transmitted from the other ones of the plurality of trading centers that are generated through performing order matching processes on the corresponding received trade orders, wherein each of the order books comprises a matched order generated by the matching process on the corresponding trade orders.

The execution module 404 is configured to initiate a consensus process on the order books generated by the plurality of trading centers and execute the matched order in each of the order books for which consensus has been reached.

In this embodiment, clocks of the plurality of trading centers in the distributed exchange are calibrated and synchronized in advance.

In this embodiment, the transmission module 402 may be further configured to:

prior to receiving a trade order submitted by a user terminal in communication with a local one of the plurality of trading centers, push transaction quote information to the user terminal in communication with the local one of the plurality of trading centers and record a time instant of pushing the transaction quote information.

In this embodiment, the trade order transmitted to the other ones of the plurality of trading centers in the blockchain comprises a propagation delay of the trade order, wherein the propagation delay represents a propagation time of the trade order transmitted from the user terminal to the corresponding trading center in communication therewith.

In this embodiment, the propagation time is a time interval between the time instant of pushing the transaction quote information and a time instant of receiving the trade order.

In this embodiment, the reception module 401 may be further configured to
receive a trade order submitted by the user terminal in communication with the local one of the plurality of trading centers within a first predetermined period of time after the time instant of pushing,
wherein the reception module 401 is further configured to:
determine a transmission time instant of transmitting the received trade order to each of the other ones of the plurality of trading centers in the blockchain; and
receive trade orders transmitted from the other ones of the plurality of trading centers submitted by the user terminals in communication therewith within a second predetermined period of time after the transmission time instant.

In this embodiment, the transmission module 402 may be further configured to:
determine a start time instant of performing the order matching process on the received trade orders; and
transmit the order book that is generated within the first predetermined period of time after the start time instant to each of the other ones of the plurality of trading centers in the blockchain,
wherein the reception module 401 is further configured to:
   determine a transmission time instant of transmitting the generated order book to each of the other ones of the plurality of trading centers in the blockchain;
   receive the order book that is transmitted from each of the other ones of the plurality of trading centers and generated through performing the trade order matching process on the corresponding received trade orders within the second predetermined period of time after the transmission time instant.

In this embodiment, the first predetermined period of time may be longer than the first predetermined period of time.

In this embodiment, the trade orders may include buy orders and sell orders,
wherein the matching module 403 is configured to:
match each of the received sell orders to one of the buy orders with buy price higher than or equal to a sell price of the sell order and with a shortest propagation time to generate the matched order; and
generate the order book based on the matched order.

In this embodiment, the execution module 404 may be configured to:
compare the generated order book with each of the received order books transmitted from the other ones of the plurality of trading centers to determine the number of identical order books out of the order books generated by the plurality of trading centers;
calculate a ratio of the number of identical order books to the total number of the plurality of trading centers in the distributed exchange; and
determine whether the ratio reaches a predetermined threshold and, if so, identify the identical order books out of the order books generated by the plurality of trading centers as an order book for which consensus has been reached.

In this embodiment, the transmission module 402 may be further configured to:
return an execution result of the matched order in the order book for which consensus has been reached to the corresponding user terminal.

In this embodiment, the distributed exchange may comprise a plurality of trading centers physically distributed in different regions.

For details of the implementation of the functions and actions of the various components of the apparatus, references can be made to the implementation of the corresponding steps in the above described methods, and a further detailed description thereof will be omitted here.

Since the apparatus embodiments substantially correspond to the method embodiments, reference can be made to the above description of the method embodiments for details in the apparatus embodiments. The apparatus embodiments set forth above are only illustrative, in which the modules described as separate components may be physically separated from one another or not, and any component shown as a module may be a physical module or not, i.e., being deployed at a single location or distributed across multiple network modules. Depending on the actual needs, some or all of the modules may be selected to attain the objects of this disclosure. Those of ordinary skill in the art should understand and practice them without paying any creative effort.

The systems, apparatuses, blocks or modules explained in the foregoing embodiments may be in particular implemented by computer chips or entities, or by products with some types of functions. A typical implementation is a computer, which may be, in particular, in the form of a personal computer (PC), a laptop, a cell phone, a camera phone, a smart phone, an individual digital assistant, a media player, a navigation device, an email sending and receiving device, a game console, a tablet, a wearable device or any arbitrary combination thereof.

It is also provided therein electronic device embodiments corresponding to the above method embodiments. The electronic device is applicable to a distributed exchange set up based on a blockchain. The distributed exchange includes a plurality of trading centers deployed in a distributed manner. The electronic device includes a processor and a storage device for storing machine-executable instructions. The processor is usually connected to the storage device by an internal bus. In other possible implementations, the device may also include external interfaces allowing it to communicate with other devices or components.

In this embodiment, upon reading and executing machine-executable instructions corresponding to a control logic for blockchain-based financial trading that are stored on the storage device, the processor may be caused to:
receive a trade order submitted by a user terminal in communication with a local one of the plurality of trading centers;
transmit the received trade order to other ones of the plurality of trading centers in the blockchain and receive trade orders transmitted from the other ones of the plurality of trading centers submitted by user terminals in communication therewith;
generate an order book by performing an order matching process on the received trade orders, transmit the generated order book to each of the other ones of the plurality of trading centers in the blockchain, and receive order books transmitted from the other ones of the plurality of trading centers that are generated through performing trade order matching processes on the corresponding received trade orders, wherein each of the order books comprises a matched order generated by the matching process on the corresponding trade orders; and
initiate a consensus process on the order books generated by the plurality of trading centers and execute the matched order in each of the order books for which consensus has been reached.

In this embodiment, upon reading and executing machine-executable instructions corresponding to a control logic for blockchain-based financial trading that are stored on the storage device, the processor may be caused to:
prior to receiving a trade order submitted by a user terminal in communication with a local one of the plurality of trading centers, push a transaction quote information to the user terminal in communication with the local one of the plurality of trading centers and record a time instant of pushing the transaction quote information.

In this embodiment, upon reading and executing machine-executable instructions corresponding to a control logic for blockchain-based financial trading that are stored on the storage device, the processor may be further caused to:
receive a trade order submitted by the user terminal in communication with the local one of the plurality of trading centers within a first predetermined period of time after the time instant of pushing.

In this embodiment, upon reading and executing machine-executable instructions corresponding to a control logic for blockchain-based financial trading that are stored on the storage device, the processor may be further caused to:
determine a transmission time instant of transmitting the received trade order to each of the other ones of the plurality of trading centers in the blockchain; and
receive trade orders transmitted from the other ones of the plurality of trading centers submitted by the user terminals in communication therewith within a second predetermined period of time after the transmission time instant.

In this embodiment, upon reading and executing machine-executable instructions corresponding to a control logic for blockchain-based financial trading that are stored on the storage device, the processor may be further caused to:
determine a start time instant of performing the order matching process on the received trade orders; and
transmit the order book that is generated within the first predetermined period of time after the start time instant to each of the other ones of the plurality of trading centers in the blockchain.

In this embodiment, upon reading and executing machine-executable instructions corresponding to a control logic for blockchain-based financial trading that are stored on the storage device, the processor may be further caused to:
determine a transmission time instant of transmitting the generated order book to each of the other ones of the plurality of trading centers in the blockchain;
receive the order book that is transmitted from each of the other ones of the plurality of trading centers and generated through performing the trade order matching process on the corresponding received trade orders within the second predetermined period of time after the transmission time instant.

In this embodiment, the trade orders may include buy orders and sell orders,
upon reading and executing machine-executable instructions corresponding to a control logic for blockchain-based financial trading that are stored on the storage device, the processor is further caused to:
match each of the received sell orders to one of the buy orders with buy price higher than or equal to a sell price of the sell order and with a shortest propagation time to generate the matched order; and
generate the order book based on the matched order.

In this embodiment, upon reading and executing machine-executable instructions corresponding to a control logic for blockchain-based financial trading that are stored on the storage device, the processor may be further caused to:
compare the generated order book with each of the received order books transmitted from the other ones of the plurality of trading centers to determine the number of identical order books out of the order books generated by the plurality of trading centers;
calculate a ratio of the number of identical order books to the total number of the plurality of trading centers in the distributed exchange; and
determine whether the ratio reaches a predetermined threshold and, if so, identify the identical order books out of the order books generated by the plurality of trading centers as an order book for which consensus has been reached.

In this embodiment, upon reading and executing machine-executable instructions corresponding to a control logic for blockchain-based financial trading that are stored on the storage device, the processor may be further caused to:
return an execution result of the matched order in the order book for which consensus has been reached to the corresponding user terminal.

Other embodiments of this disclosure will become easily available to those skilled in the art upon considering the detail description and practicing the inventions disclosed herein. It is intended herein that any and all variations, applications or adaptations made to the disclosed embodiments, which follow the general principles thereof and include common general knowledge or conventional technical means in the art not disclosed herein, are embraced within the scope of this disclosure. This description and the embodiments disclosed herein should be construed as being exemplary, and the true scope and spirit thereof are indicated by the appended claims.

It should be understood that this disclosure is not limited to the exact structures that have been described above and illustrated in the accompanying drawings, and various modifications and changes are possible without departing from the scope thereof. The scope of this disclosure is limited only by the appended claims.

Presented above are merely some preferred embodiments of this disclosure, which, however, do not limit the disclosure in any sense. Any and all changes, equivalent alternatives, modifications and the like made without departing from the spirit and principles of the present invention are all intended to fall within the scope thereof.

## Claims

1. A method for blockchain-based financial trading, applied to a distributed exchange set up based on a blockchain, the distributed exchange comprising a plurality of trading centers deployed in a distributed manner, the method comprising:
receiving a trade order submitted by a user terminal in communication with a local one of the plurality of trading centers;
transmitting the received trade order to other ones of the plurality of trading centers in the blockchain and receiving trade orders transmitted from the other ones of the plurality of trading centers submitted by user terminals in communication therewith;
generating an order book by performing an order matching process on the received trade orders, transmitting the generated order book to each of the other ones of the plurality of trading centers in the blockchain, and receiving order books transmitted from the other ones of the plurality of trading centers that are generated through performing order matching processes on the corresponding received trade orders, wherein each of the order books comprises a matched order generated by the matching process on corresponding trade orders; and
initiating a consensus process on the order books generated by the plurality of trading centers and executing the matched order in each of the order books for which consensus has been reached.

2. The method of claim 1, comprising calibrating and synchronizing a clock of each of the plurality of trading centers in the distributed exchange in advance.

3. The method of claim 1, comprising, prior to receiving a trade order submitted by a user terminal in communication with a local one of the plurality of trading centers:
pushing transaction quote information to the user terminal in communication with the local one of the plurality of trading centers and recording a time instant of pushing the transaction quote information.

4. The method of claim 3, wherein the trade order transmitted to the other ones of the plurality of trading centers in the blockchain comprises a propagation delay of the trade order, wherein the propagation delay represents a propagation time of the trade order transmitted from the user terminal to the corresponding trading center in communication therewith.

5. The method of claim 4, wherein the propagation time is a time interval between the time instant of pushing the transaction quote information and a time instant of receiving the trade order.

6. The method of claim 3, wherein receiving a trade order submitted by a user terminal in communication with a local one of the plurality of trading centers comprises:
receiving a trade order submitted by the user terminal in communication with the local one of the plurality of trading centers within a first predetermined period of time after the time instant of pushing, and
wherein receiving trade orders transmitted from the other ones of the plurality of trading centers submitted by user terminals in communication therewith comprises:
determining a transmission time instant of transmitting the received trade order to each of the other ones of the plurality of trading centers in the blockchain; and
receiving trade orders transmitted from the other ones of the plurality of trading centers submitted by user terminals in communication therewith within a second predetermined period of time after the transmission time instant.

7. The method of claim 6, wherein transmitting the generated order book to each of the other ones of the plurality of trading centers in the blockchain comprises:
determining an initial time instant of starting the order matching process on the received trade orders; and
transmitting the order book that is generated within the first predetermined period of time after the initial time instant to each of the other ones of the plurality of trading centers in the blockchain, and
wherein receiving order books transmitted from the other ones of the plurality of trading centers that are generated through performing order matching processes on the corresponding received trade orders comprises:
determining a transmission time instant of transmitting the generated order book to each of the other ones of the plurality of trading centers in the blockchain; and
receiving the order book that is transmitted from each of the other ones of the plurality of trading centers and generated through performing the order matching process on the corresponding received trade orders within the second predetermined period of time after the transmission time instant.

8. The method of claim 6 or 7, wherein the first predetermined period of time is longer than the first predetermined period of time.

9. The method of claim 3, wherein the trade orders include buy orders and sell orders, and
wherein generating an order book by performing an order matching process on the received trade orders comprises:
matching each of the sell orders to one of the buy orders with a buy price higher than or equal to a sell price of the sell order and with a shortest propagation time to generate the matched order; and
generating the order book based on the matched order.

10. The method of claim 1, wherein initiating a consensus process on the order books generated by the plurality of trading centers comprises:
comparing the generated order book with each of the received order books transmitted from the other ones of the plurality of trading centers to determine the number of identical order books out of the order books generated by the plurality of trading centers;
calculating a ratio of the number of identical order books to the total number of the plurality of trading centers in the distributed exchange; and
determining whether the ratio reaches a predetermined threshold and, if so, identifying the identical order books out of the order books generated by the plurality of trading centers as an order book for which consensus has been reached.

11. The method of claim 1, further comprising:
returning an execution result of the matched order in the order book for which consensus has been reached to a corresponding user terminal.

12. The method of claim 1, wherein the distributed exchange comprises a plurality of trading centers physically distributed in different regions.

13. An apparatus for blockchain-based financial trading, applied to a distributed exchange set up based on a blockchain, the distributed exchange comprising a plurality of trading centers deployed in a distributed manner, the apparatus comprising:
a reception module configured to receive a trade order submitted by a user terminal in communication with a local one of the plurality of trading centers;
a transmission module configured to transmit the received trade order to other ones of the plurality of trading centers in the blockchain and receive trade orders transmitted from the other ones of the plurality of trading centers submitted by user terminals in communication therewith;
a matching module configured to generate an order book by performing an order matching process on the received trade orders,
the transmission module further configured to transmit the generated order book to each of the other ones of the plurality of trading centers in the blockchain, the reception module further configured to receive order books transmitted from the other ones of the plurality of trading centers that are generated through performing order matching processes on the corresponding received trade orders, wherein each of the order books comprises a matched order generated by the matching process on corresponding trade orders; and
an execution module configured to initiate a consensus process on the order books generated by the plurality of trading centers and execute the matched order in each of the order books for which consensus has been reached.

14. The apparatus of claim 13, comprising calibrating and synchronizing a clock of each of the plurality of trading centers in the distributed exchange in advance.

15. The apparatus of claim 13, wherein the transmission module is further configured to,
prior to receiving a trade order submitted by a user terminal in communication with a local one of the plurality of trading centers, push transaction quote information to the user terminal in communication with the local one of the plurality of trading centers and record a time instant of pushing the transaction quote information.

16. The apparatus of claim 15, wherein the trade order transmitted to the other ones of the plurality of trading centers in the blockchain comprises a propagation delay of the trade order, wherein the propagation delay represents a propagation time of the trade order transmitted from the user terminal to the corresponding trading center in communication therewith.

17. The apparatus of claim 16, wherein the propagation time is a time interval between the time instant of pushing the transaction quote information and a time instant of receiving the trade order.

18. The apparatus of claim 15, wherein the reception module is further configured to receive a trade order submitted by the user terminal in communication with the local one of the plurality of trading centers within a first predetermined period of time after the time instant of pushing, and
wherein the reception module is further configured to:
determine a transmission time instant of transmitting the received trade order to each of the other ones of the plurality of trading centers in the blockchain; and
receive trade orders transmitted from the other ones of the plurality of trading centers submitted by the user terminals in communication therewith within a second predetermined period of time after the transmission time instant.

19. The apparatus of claim 18, wherein the transmission module is further configured to:
determine an initial time instant of starting the order matching process on the received trade orders; and
transmit the order book that is generated within the first predetermined period of time after the initial time instant to each of the other ones of the plurality of trading centers in the blockchain, and
wherein the reception module is further configured to:
determine a transmission time instant of transmitting the generated order book to each of the other ones of the plurality of trading centers in the blockchain;
receive the order book that is transmitted from each of the other ones of the plurality of trading centers and generated through performing the trade order matching process on the corresponding received trade orders within the second predetermined period of time after the transmission time instant.

20. The apparatus of claim 18 or 19, wherein the first predetermined period of time is longer than the first predetermined period of time.

21. The apparatus of claim 13, wherein the trade orders include buy orders and sell orders, and
wherein the matching module is configured to:
match each of the received sell orders to one of the buy orders with buy price higher than or equal to a sell price of the sell order and with a shortest propagation time to generate the matched order; and
generate the order book based on the matched order.

22. The apparatus of claim 13, wherein the execution module is configured to:
compare the generated order book with each of the received order books transmitted from the other ones of the plurality of trading centers to determine the number of identical order books out of the order books generated by the plurality of trading centers;
calculate a ratio of the number of identical order books to the total number of the plurality of trading centers in the distributed exchange; and
determine whether the ratio reaches a predetermined threshold and, if so, identify the identical order books out of the order books generated by the plurality of trading centers as an order book for which consensus has been reached.

23. The apparatus of claim 13, wherein the transmission module is further configured to:
return an execution result of the matched order in the order book for which consensus has been reached to a corresponding user terminal.

24. The apparatus of claim 13, wherein the distributed exchange comprises a plurality of trading centers physically distributed in different regions.

25. An electronic device applied to a distributed exchange set up based on a blockchain, the distributed exchange comprising a plurality of trading centers deployed in a distributed manner, the electronic device comprising:
a processor; and
a storage device for storing machine-executable instructions,
wherein upon reading and executing machine-executable instructions corresponding to a control logic for blockchain-based financial trading that are stored on the storage device, the processor is caused to:
receive a trade order submitted by a user terminal in communication with a local one of the plurality of trading centers;
transmit the received trade order to other ones of the plurality of trading centers in the blockchain and receive trade orders transmitted from the other ones of the plurality of trading centers submitted by user terminals in communication therewith;
generate an order book by performing an order matching process on the received trade orders, transmit the generated order book to each of the other ones of the plurality of trading centers in the blockchain, and receive order books transmitted from the other ones of the plurality of trading centers that are generated through performing trade order matching processes on the corresponding received trade orders, wherein each of the order books comprises a matched order generated by the matching process on corresponding trade orders; and
initiate a consensus process on the order books generated by the plurality of trading centers and execute the matched order in each of the order books for which consensus has been reached.
